Europäisches Patentamt

European Patent Office

Office européen des brevets

(11) Numéro de publication: **0 438 002 A1**

# DEMANDE DE BREVET EUROPEEN

(21) Numéro de dépôt: 90403791.8

(22) Date de dépôt: 27.12.90

(51) Int. Cl.⁵: **B32B 3/12**, B32B 11/00, E04B 1/86

(30) Priorité: 17.01.90 FR 9000483

(43) Date de publication de la demande:
24.07.91 Bulletin 91/30

(84) Etats contractants désignés:
**BE DE ES FR GB IT LU NL**

(71) Demandeur: **MATFOR**
**28, Avenue Hoche**
**F-75008 Paris(FR)**

(72) Inventeur: **Marchais, Jean Etienne**
**76 Rue de Belleville**
**F-75020 Paris(FR)**

(74) Mandataire: **Jacobson, Claude et al**
**Cabinet Lavoix 2, Place d'Estienne d'Orves**
**F-75441 Paris Cedex 09(FR)**

(54) **Panneau composite, notamment pour cloison mobile de bâtiment, et son procédé de fabrication.**

(57) Ce panneau composite comprend deux parements extérieurs (1, 2) séparés par un remplissage (3) qui est constitué par une résille (4) en nid d'abeilles et par un feutre bitumé (5), les couches du panneau étant collées les unes aux autres.

Application à la constitution de cloisons mobiles pour le bâtiment.

FIG.1

EP 0 438 002 A1

# PANNEAU COMPOSITE, NOTAMMENT POUR CLOISON MOBILE DE BÂTIMENT, ET SON PROCÉDÉ DE FABRICATION.

La présente invention concerne un panneau composite à isolation acoustique renforcée, du type présentant sur sensiblement toute sa surface une structure uniforme qui comprend plusieurs couches solidaires les unes des autres, dont deux parements extérieurs et un remplissage formant entretoise rigide entre ces parements.

Dans les panneaux composites de ce type, les parements définissent deux surfaces extérieures dont l'écartement, assuré par le remplissage, doit être bien déterminé en vue du positionnement des panneaux dans une ossature métallique. Par ailleurs, l'une au moins de ces surfaces extérieures, et généralement les deux, doivent être adaptées pour recevoir un revêtement de finition.

Pour remplir ces conditions de façon économique, et garantir de bonnes propriétés mécaniques des panneaux, il est connu d'utiliser comme remplissage une résille en nid d'abeilles. Cependant, les panneaux composites connus ainsi constitués possèdent un faible niveau de performances acoustiques.

L'invention a pour but de fournir un panneau composite dont les performances acoustiques soient nettement améliorées sans nuire à ses autres propriétés.

A cet effet, l'invention a pour objet un panneau composite du type précité, caractérisé en ce qu'au remplissage est adjointe au moins une couche d'un matériau visco-élastique située à l'intérieur du panneau.

De préférence ;
- le matériau visco-élastique est un matériau bitumineux;
- toutes les couches du panneau sont collées les unes aux autres;
- le remplissage comprend une résille en nid d'abeilles.

L'invention a également pour objet un procédé de fabrication d'un panneau composite utilisant un matériau bitumineux. Selon ce procédé, on colle le matériau bitumineux aux deux couches adjacen-tes par chauffage de ce matériau, tandis que les autres liaisons entre les couches du panneau sont effectuées au moyen d'une colle rapportée.

Quelques exemples de réalisation de l'invention vont maintenant être décrits en regard du dessin annexé, sur lequel :
- les Fig. 1 à 3 représentent respectivement, en coupe longitudinale, trois variantes du panneau composite conforme à l'invention ;
- la Fig. 4 représente en perspective une résille utilisée dans ces panneaux ; et
- la Fig. 5 illustre schématiquement les diverses étapes de fabrication du panneau composite de la Fig. 1.

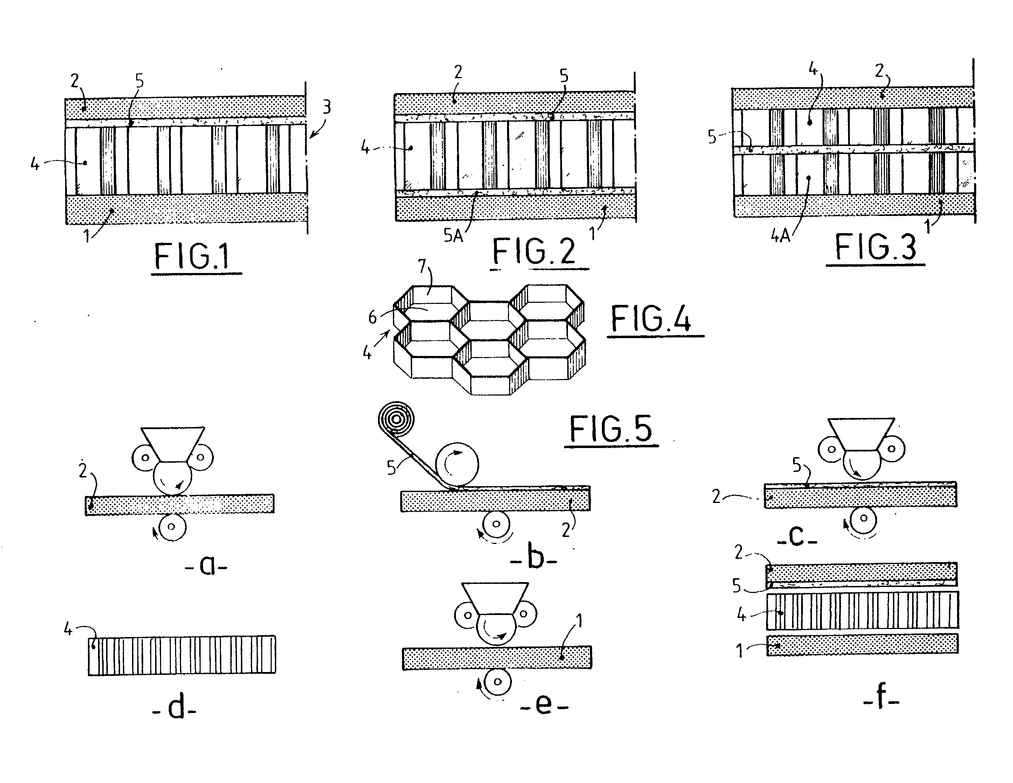

Le panneau composite représenté à la Fig. 1 a une forme générale rectangulaire, en vue en plan, et est destiné à la constitution d'une cloison mobile dans un bâtiment. Il consiste en plusieurs couches collées les unes aux autres et ayant toutes sensiblement les mêmes dimensions en vue en plan, a savoir :
- deux parements extérieurs 1 et 2 constitués chacun par une plaque de plâtre cartonné, et
- entre ces deux parements, un remplissage 3 formant entretoise et constitué lui-même par une résille de carton 4 surmontée d'un feutre bitumé 5.

A titre d'exemple numérique, on peut choisir les épaisseurs suivantes : 13 mm pour la plaque 1, 34 mm pour la résille 4, environ 2 mm pour le feutre 5, et 10 mm pour la plaque 2.

Comme on le voit à la Fig. 4, la résille 4 présente un grand nombre d'alvéoles hexagonaux 6 délimités par des parois 7 perpendiculaires au plan général du panneau. Elle est obtenue, de façon classique, par étirage dans son plan d'un morceau de carton préalablement fendu de manière appropriée.

Un procédé de fabrication du panneau composite de la Fig. 1 est illustré à la Fig. 5. Ce procédé comprend les étapes suivantes :
(a) la plaque 2 est encollée, en position inversée, sur sa face supérieure ;
(b) le feutre bitumé 5 est posé sur la face encollée ;
(c) la face supérieure libre du feutre 5 est encollée ;
(d) la résille 4 est étirée ;
(e) la face supérieure de la plaque 1 est encollée ;
(f) après retournement de l'ensemble plaque 2-feutre 5, la plaque 1, la résille 4 et cet ensemble plaque 2-feutre 5 sont empilés dans cet ordre ;
(g) enfin, l'empilage est pressé pour obtenir l'épaisseur totale prévue entre les surfaces libres des deux parements.

Le panneau composite ainsi obtenu présente simultanément :
- sur chaque face, une surface adaptée pour recevoir un revêtement de finition ;
- une épaisseur bien définie, ce qui permet son montage aisé dans une ossature métallique ;
- de bonnes propriétés mécaniques, grâce à l'inertie qui lui est conférée par la résille ;
- une structure homogène qui lui permet d'être découpé sans difficulté aux dimensions voulues; et

- de bonnes performances acoustiques, grâce à la présence de la couche 5, qui est visco-élastique et relativement lourde et confère au panneau une structure du type masse-ressort-masse.

En variante, comme représenté à la Fig. 2, une deuxième couche de feutre bitumé 5A peut être collée entre la résille et la plaque 1, ou bien (Fig. 3) la couche 5 peut être collée entre deux résilles 4 et 4A. Plus généralement, le remplissage du panneau, entre les deux parements, peut se composer d'une superposition de résilles et de feutres bitumés. Bien entendu, l'épaisseur de chaque parement et de chaque résille est adaptée à la configuration choisie.

La résille utilisée peut être constituée d'un matériau autre que le carton, par exemple de polypropylène ou de métal, tandis que les parements peuvent être des plaques métalliques, des panneaux de fibres de bois, etc.. Les combinaisons carton-plâtre cartonné et carton-panneaux de fibres de bois présentent toutefois un avantage important du point de vue économique.

On peut également remplacer la résille par un autre matériau ayant des propriétés voisines, par exemple par une mousse rigide de matière plastique. Toutefois, on perd alors l'avantage suivant. Pendant l'étape (g) de calibrage décrite plus haut, la résille pénètre facilement dans la couche bitumineuse, sans s'écraser, si celle-ci est à température suffisante, ce qui permet d'obtenir une épaisseur finale très précise pour le panneau malgré des tolérances importantes sur chaque couche. Cette facilité de calibrage n'existe pas avec un bloc de mousse à surfaces continues.

En variante également, le collage du feutre bitumé peut être réalisé par simple chauffage de ce matériau, en mettant ainsi à profit les propriétés auto-adhésives du bitume. De même, le feutre bitumé peut être remplacé par une simple couche d'un matériau bitumineux coulé à chaud.

On peut encore envisager de remplacer la couche de feutre bitumé par une couche incomplète, par exemple par une série de bandes parallèles du même matériau, dans la mesure on l'on conserve un appui surfacique suffisant pour les parements.

**Revendications**

1. Panneau composite à isolation acoustique renforcée, du type présentant sur sensiblement toute sa surface une structure uniforme qui comprend plusieurs couches solidaires les unes des autres, dont deux parements extérieurs (1, 2) et un remplissage (3) formant entretoise rigide entre ces parements, caractérisé en ce qu'au remplissage est adjointe au moins une couche (5, 5A) d'un matériau visco-élastique située à l'intérieur du panneau.

2. Panneau composite suivant la revendication 1, caractérisé en ce que le matériau visco-élastique est un matériau bitumineux.

3. Panneau composite suivant la revendication 2, caractérisé en ce que le matériau bitumineux est un feutre bitumé.

4. Panneau composite suivant la revendication 2, caractérisé en ce que le matériau bitumineux est coulé à chaud.

5. Panneau composite suivant l'une quelconque des revendications 1 à 3, caractérisé en ce que toutes les couches du panneau sont collées les unes aux autres.

6. Panneau composite suivant l'une quelconque des revendications 1 à 5, caractérisé en ce que le remplissage (3) comprend une résille (4) en nid d'abeilles.

7. Panneau composite suivant la revendication 6, caractérisé en ce que la résille (4) est en carton.

8. Panneau composite suivant l'une quelconque des revendications 1 à 7, caractérisé en ce que chaque parement (1, 3) est une plaque de plâtre cartonné ou un panneau de fibres de bois.

9. Procédé de fabrication d'un panneau composite suivant l'une quelconque des revendications 2 à 4, caractérisé en ce qu'on colle le matériau bitumineux (5, 5A) aux deux couches adjacentes (2, 4) par chauffage de ce matériau, tandis que les autres liaisons entre les couches du panneau sont effectuées au moyen d'une colle rapportée.

FIG.1

FIG.2

FIG.3

FIG.4

FIG.5

-a-

-b-

-c-

-d-

-e-

-f-

EP 0 438 002 A1

**Office européen
des brevets**

**RAPPORT DE RECHERCHE
EUROPEENNE**

Numéro de la demande

**EP 90 40 3791**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,A | EP-A-0 322 381 (T.C.R. S.R.L.) <br> * le document en entier * <br> — — — | 1,2,6,8, <br> 3-5,7,9 | B 32 B 3/12 <br> B 32 B 11/00 <br> E 04 B 1/86 |
| X | US-A-3 802 950 (STEVENS) <br> * colonne 2, lignes 3 - 50 * * colonne 9, ligne 56 - colonne 11, ligne 40; figures 1, 2 * <br> — — — | 1,2,4,5,9 | |
| A | GB-A-4 322 39 (WALDEMAR OELSNER & CO.) <br> * page 1, lignes 81 - 101 * * page 2, lignes 14 - 43; figures * <br> — — — | 1,2 | |
| A | GB-A-1 132 167 (CELLAIR LTED.) <br> * page 1, ligne 9 - page 2, ligne 21 * * page 3, lignes 14 - 69; figures 1, 2 * <br> — — — | 1-7 | |
| A | DE-A-2 230 901 (ASAHI KASEI KOGYO K.K.) <br> * revendications 1-5 * * page 7, lignes 20 - 27; figures 1-3 * <br> — — — | 1,8 | |
| A | FR-A-2 193 520 (SAINT-GOBAIN) <br> * page 3, lignes 17 - 27; figure 1 * <br> — — — — — | 8 | |

**DOMAINES TECHNIQUES
RECHERCHES (Int. Cl.5)**

B 32 B
E 04 C 2

Le présent rapport de recherche a été établi pour toutes les revendications

| Lieu de la recherche | Date d'achèvement de la recherche | Examinateur |
|---|---|---|
| La Haye | 27 mars 91 | IBARROLA TORRES O.M. |